# EUROPEAN PATENT APPLICATION

(11) **EP 0 768 590 A1**
(43) Date of publication of application: **16.04.1997**
(21) Application number: 95830432.1
(22) Date of filing: 13.10.1995
(51) Int. Cl.: G05D 23/00, G05D 23/22, D02J 13/00, D02G 1/02

(54) **A method and equipment for controlling the temperature of the ovens of a texturising machine**

(71) Applicant: OFFICINE MECCANICHE RIVA S.r.l., 22048 Oggiono (Como) (IT)
(72) Inventor: D'Agnolo, Armando, I-33080 Porcia, Pordenone (IT)
(74) Representative: Maggioni, Claudio

(57) **Abstract**

With the method described, the absolute temperature (Ta) of one of the ovens (F1), taken as the reference oven, is measured and the absolute temperature of each of the other ovens are calculated by measuring the differences in temperature (ΔVi, DTi) between pairs of ovens and by calculating the algebraic sum of these measaured differences and the measured temperature of the reference oven. Each of the absolute temperatures (Ti) thus obtained is compared with a reference value (SETP) so as to activate or deactivate the power supply to the respective oven (Fi) if the comparison shows that the temperature of the oven is lower or higher than the reference temperature.

The equipment described carries out the method by using, as oven-temperature sensors, thermocouples (Tci) connected together in series and in pairs in counterphase and by measuring any departure of the voltages between two adjacent thermocouples from zero.

Highly accurate regulation is thus achieved despite the use of ordinary thermocouples.

## Description

The present invention relates to a method and equipment for controlling the temperature of the ovens of a texturising machine.

Texturising is a process involving heat and mechanical action which is used in the textile industry to give a synthetic thread characteristics which make it similar to a thread of natural fibres.

Texturising machines are designed to treat hundreds of threads simultaneously. The threads are unwound from a starting bobbin by rotating shafts and pass through drawing, twisting and heating zones before finally being packaged.

In order to increase their productivity, texturising machines have recently been introduced in which the heating step is carried out at a higher temperature. In practice, the process has moved from temperatures of around 200°C in conventional ovens with diathermic oil to temperatures of 400-700°C in the new high-temperature, or HT, ovens. Thanks to this higher processing temperature, the heat required to treat the thread is transferred faster: this means that the thread spends less time in the oven with the result that the speed of production is increased and the part of the machine used for heat treatment can be smaller.

The use of HT ovens means that it is necessary to revise the method by which the temperature is controlled. In diathermic oil ovens, thermoresistances are used as temperature sensors, these giving good accuracy at normal processing temperatures. Thermoresistances cannot be used in HT ovens as the high processing temperatures would lead to a rapid deterioration in their performance. For this reason, thermocouples are used as temperature sensors, it being known that their performance stands up better under high temperatures.

In order to obtain the accuracy provided by heat resistances it is necessary not only to use more complex electronic circuits to process the signals from the thermocouples but also to use high-precision thermocouples. For the purposes of the present application, accuracy should be understood to mean even temperature. The texturisation process is in fact carried out simultaneously at numerous positions and thus on numerous threads and, since even minute differences in the working temperatures result in visible defects in the product obtained in the successive processes, it is of crucial importance for all the ovens which the threads pass through to be at the same temperature.

In order to ensure that the temperature is sufficiently uniform, all of the thermocouples used in the ovens which are to be regulated to the same temperature must be selected with great care, even if they come from the same manufacturing batch, so as to ensure that their response characteristics are as similar as possible. In addition, the response of thermocouples tends to drift as they age so that, if one thermocouple develops a fault, it is often necessary to replace all of the thermocouples in the ovens to be regulated in order to maintain the same accuracy. Since there are usually a great number of ovens to be regulated to the same temperature, since high-precision thermocouples are relatively expensive and since their replacement requires considerable attention from maintenance personnel and is thus an expensive operation, the new texturising machines using HT ovens are struggling to establish themselves, despite the productivity advantages which they offer.

The object of the present invention is to provide a method and equipment for controlling the temperature of a group of ovens in a texturising machine which eliminate the disadvantages described above and enable machines to be manufactured which are more economical and easier to maintain.

This object is achieved by putting into effect the method described in general in Claim 1 and by providing the machine, based on this method, defined in general in Claim 3.

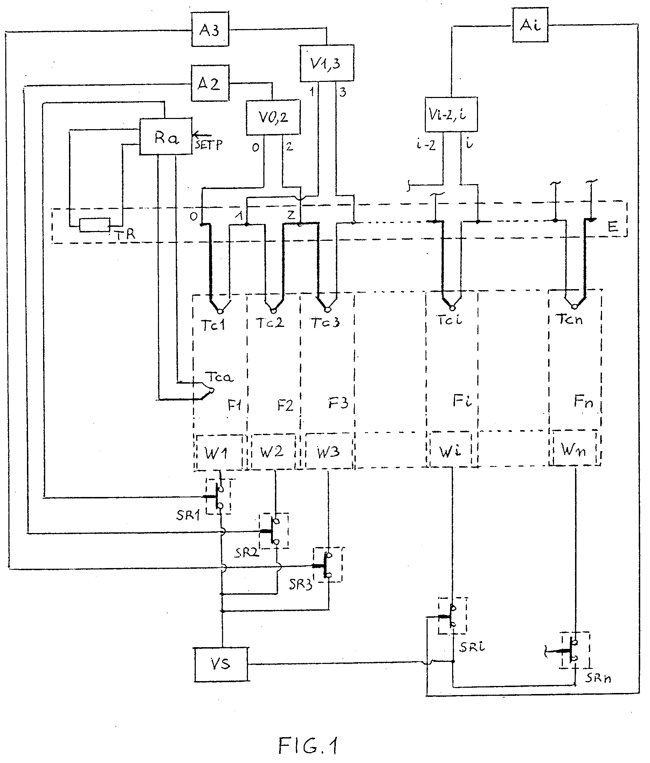

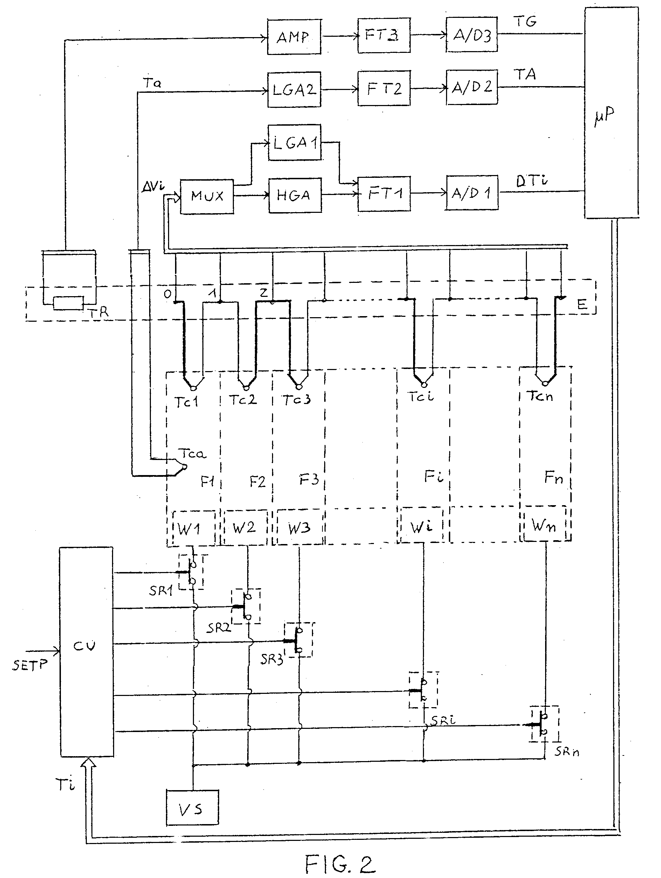

The invention will be better understood from the following detailed description, given with reference to the appended drawings in which Figures 1 and 2 are schematic representations of a group of ovens in a texturising machine fitted with two embodiments of temperature-control equipment according to the invention.

In the drawings, the ovens are represented by rectangles alongside each other and indicated F1, F2,...Fi, ...., Fn, where i indicates a generic oven of the group and n indicates the number of ovens in the group. In one practical embodiment the number n was 6 but the invention may to advantage be applied to control the temperature of a far greater number of ovens, for example 200. The structure of an oven and of a texturising machine are described, for example, in Italian Patent Application No. 1173293 entitled "A Machine for the Production of Textured Crêpe Thread".

Each oven has an associated heating unit W1, W2, .... Wi, ...., Wn, for example an electrical resistance, and a thermocouple Tc1, Tc2, ....Tci, ...., Tcn, for example a common J-type thermocouple made of iron and constantan. These thermocouples are connected together in series and, more precisely, with the terminals of the same metal of two adjacent thermocouples connected to each other. This type of connection between two thermocouples will be described hereafter as "in counter-phase".

With reference to Figure 1, a thermocouple indicated Tca, also of the J type but preferably giving higher precision, is arranged in one of the ovens, in this example in F1, to be considered as the reference oven. The thermocouple Tca acts as an absolute temperature sensor and, together with an absolute temperature regulator indicated Ra, a generator of temperature reference signals, in this case a thermoresistance TR, a static relay SR1, represented as a normally closed switch, and the heating unit W1, forms part of a closed regulating loop, in itself known, of the PID, that is, proportional-integral-derivative type for instance, which tends to keep the temperature of the oven F1 at a predetermined temperature, for example 500°C. The thermoresistance TR compensates for the temperature of the cold junction of the thermocouple Tca and thus enables an absolute value for the temperature of the oven F1 to be fixed. The desired value of the temperature of the oven is set by a suitable manual control, indicated SETP, of the regulator Ra. This latter compares the temperature recorded by the thermocouple Tca, compensated by the thermoresistance TR, with the desired temperature, and outputs a signal for closing or opening the static relay SR1 if the recorded temperature is lower or higher than the reference temperature respectively. Thus the heating unit W1 is connected to or disconnected from a supply indicated VS so as to raise or lower the temperature and thus adjust the temperature to the desired value.

The terminals of two adjacent thermocouples which are of the same metal but not connected to each other in series are connected to respective voltmeters, indicated VO2, VI3, .... Vi,i+2, ... For example, the terminals indicated 0 and 2 of the thermocouples Tc1 and Tc2 are connected to the voltmeter V02, the terminals 1 and 3 of the thermocouples Tc2 and Tc3 are connected to the voltmeter V13 and the terminals i-2 and i of the thermocouples Tc(i-2) and Tci are connected to the voltmeter Vi-2,i. The voltmeters, through respective power amplifiers indicated A2, A3, ....Ai, control static relays Sr2, Sr3, .... Sri, also shown as normally closed switches, which close the supply circuits of the respective heating units. In particular, each voltmeter receives a voltage which is the algebraic sum of the voltages generated by two adjacent thermocouples in the series connection. Since the thermocouples are identical and connected together in counterphase, this voltage is nil when the two thermocouples are at the same temperature.

It should be noted that all of the connections, between the thermocouples and the voltmeters are preferably made with wires of the same metal, for example copper and are kept at the same temperature so as not to affect the measurements. This is achieved in practice by encapsulating all the connections in a block of epoxy resin, indicated E. For practical reasons, the connections between the thermocouple Tca and the regulator Ra, as well as the thermoresistance TR which measures the temperature of the cold junction of the absolute thermocouple Tca, are also encapsulated in this block.

In use, in order to bring the ovens to the predetermined temperature, the supply unit VS is switched on and thus supplies all the heating units of the ovens. When the temperature in the reference oven F1 reaches the temperature set by means of the absolute regulating loop, the temperatures in the other ovens are all close to the predetermined value if the ovens and their respective heating units are substantially the same, as in fact happens. Any difference in temperature between the oven F2 and the oven F1 is detected by the voltmeter V02 as a departure of the input voltage from zero. This departure constitutes the control magnitude for the regulation of the oven temperatures. This is amplified by the power amplifier A2 and, depending on its sign, causes the static relay SR2 to open or close, thus opening or closing the supply circuit of the heating unit W2. As a result, the temperature in the oven F2 is lowered or raised in a process which tends to adjust the temperature of the oven F2 to the temperature of the oven F1.

The temperature of the oven F3 is brought to the same value in exactly the same way with the use of the temperature of the oven F1 as the reference. In general, the temperature of the i-th oven Fi is brought to the same value with the use of the temperature of the oven F(i-1) as the reference. Under normal operating conditions, therefore, all the ovens in the group are at substantially the same temperature.

The embodiment illustrated in Figure 2 differs from that of Figure 1 essentially in that the differential temperature measurements are not used directly to control the heating units. They are used instead to determine the absolute temperature of each oven Fi. More specifically, the temperature of the oven F1 is obtained from the algebraic sum of the temperature of the oven F1 and the differences between the temperatures measured for the ovens F2 and F1, the ovens F3 and F2 and so on up to the difference between temperatures measured for the ovens Fi and Fi-1. The absolute temperatures thus obtained are then compared with a predetermined temperature and each oven is switched on or off in accordance with the result.

The voltage differences ΔVi measured by adjacent thermocouples in the series connection are read one at a time by a multiplexer MUX, amplified in an high-gain amplifier stage HGA or in an low-gain amplifier stage LGA1, filtered by a low-pass filter FT1 and converted into a digital signal DTi by an analog-digital convertor A/D1. The multiplexer MUX is controlled so as to select the high-gain amplifier HGA when the voltage difference measured is less than a given threshold , for example 1mV, and to select the low-gain amplifier LGA1 when this voltage threshold is exceeded. The absolute temperature Ta of the oven F1 is amplified in its turn in a low-gain amplifier LGA2, filtered through a low-pass filter FT2 and converted into a digital signal TA by an analog-digital convertor A/D2. In practice, with suitable circuit devices, it may be possible to use a single low-gain amplification channel to treat the voltage corresponding to the absolute temperature Ta and to treat the voltage differences ΔVi corresponding to the differences in temperature between adjacent ovens.

The voltage signal from the thermoresistance TR is also amplified, in an amplifier AMP, filtered through a low-pass filter FT3 and converted into a digital signal TG in an analog-digital converter A/D3. The digital signals DTi, TA and TG are entered into a microprocessor µP which carries out the arithmetical operations required to determine the absolute temperature of each oven. The relative data Ti are sent in serial form to a regulator system, generally indicated CU, which outputs signals for closing or opening the static switches in accordance with a PID type regulating algorithm which determines the duration of each signal in dependence on the difference between the individual recorded temperatures Ti and a set reference temperature, indicated SETP in the drawing.

As may be seen, the method and the equipment of the invention make it possible to regulate the temperature of all the ovens in the group, keeping this constantly at a predetermined value, by means of a single high-precision thermocouple. As all the thermocouples in the series connection have to operate differentially and within an extremely narrow temperature range, they ensure high precision even if they are not all perfectly identical. This represents a considerable advantage not only in the financial saving due to the lower cost of the thermocouples but also due to the fact that, if one thermocouple develops a fault, it is possible to replace this thermocouple alone, without having to change all the thermocouples in the oven assembly. In addition, the differential operation means that any drift of the thermocouples is compensated for automatically.

It should also be noted that, whenever extremely precise regulation to a predetermined temperature is unnecessary but it is essential simply to ensure that the ovens in the assembly are at a uniform temperature, the thermocouple provided to measure the absolute temperature can also be an ordinary one.

Although only two embodiments of the invention are described and illustrated here, it is clear that numerous variations and modifications are possible without departing from the inventive concept. For example, the connections of the cold junction of the thermocouple Tca and the thermoresistance TR could be encapsulated in a different block from that encapsulating the connections of the thermocouple Tci, while a sensor other than a thermocouple could be used as the absolute-temperature sensor of the first oven; in addition, the temperature of the first oven could be measured without the need for a special sensor, the thermocouple Tc1 of the series connection for the differential measurement being used instead. It is clear that any oven in the oven assembly may be defined as the "first oven".

In a further embodiment, the same control method could be applied to a texturising machine in which various groups of ovens are associated in a similar manner to that described above for the individual ovens in a group, that is, by taking the temperature of one oven group as the reference temperature and regulating the temperature of the other groups by using the instantaneous temperature difference between a generic i-th group and the(i-1)-th group.

## Claims

1. A method for controlling the temperature of a group of ovens (Fi) in a texturising machine, characterised in that it provides for
the temperature of one oven, or first oven i=1, (F1) to be regulated to a predetermined value (SETP) and
the temperature of the other ovens in the group to be regulated to this same predetermined value with the use for the regulation of a generic i-th oven (Fi), where i is greater than 1, of the instantaneous difference in temperature between the i-th oven and the(i-1)th oven.

2. A method according to Claim 1, in which
the regulation of the temperature of the first oven (F1) involves the measurement of the absolute temperature of the oven and
the regulation of the temperature of the other ovens (Fi) involves the steps of
- measuring the instantaneous temperature difference between the i-th oven (Fi) and the (i-1)-th oven (Fi-1),
- obtaining the absolute temperature of the generic i-th oven (Fi) by calculating the algebraic sum of the absolute temperature measured in the first oven (F1) and all the temperature differences (DTi) measured between the ovens from the first (F1) to the i-th (Fi),
and in which the regulation of the first oven and of the other ovens also involves
a comparison of each absolute temperature (Ti) with a predetermined temperature (SETP) and
activation of the power supply (VS, SRi) of each oven for which this comparison shows that the temperature Ti of the oven is less than the predetermined value.

3. Equipment for controlling the temperature of a multiplicity of ovens in a texturising machine, this equipment including
a heating unit and a temperature sensor associated with each oven, and
regulating means connected to the heating units and to the temperature sensors for switching the heating units on or off individually in dependence on the temperatures detected by the sensors and on a predetermined temperature, characterised in that
the temperature sensors are thermocouples (Tci), formed by the coupling of two different metals, these being connected to each other in series with the terminals of the same metal of each pair of adjacent thermocouples in the series connected to each other, and
in that an absolute-temperature sensor (Tca) associated with one of the ovens (F1).

4. Equipment according to Claim 3, in which the regulating means comprise
an absolute-temperature regulator (Ra) connected to the absolute-temperature sensor (Tca), to a generator (TR) of temperature reference signals and to the heating unit (W1) associated with the oven (F1) having the absolute-temperature sensor (Tca) and operable to maintain the temperature of this oven at the predetermined temperature,
a multiplicity of voltmeters (Vi-2,i) each connected to the two terminals of two adjacent thermocouples (Tci) in the series connection which are of the same metal and not connected to each other and
a corresponding multiplicity of regulating elements (SRi) each connected to a voltmeter, each acting on a respective heating unit (Wi) so as to keep the voltage measured by the respective meter substantially at zero.

5. Equipment according to Claim 3, in which the regulating means include:
means for measuring the voltage (ΔVi) between two terminals of two adjacent thermocouples (Tci) in the series connection which are of the same metal and which are not connected to each other,
processing means (µP) for calculating from the voltage measurements (ΔVi) the corresponding temperature differences (DTi) and for calculating the absolute temperature of each generic i-th oven by calculating the algebraic sum of the absolute temperature (TA) measured by the absolute-temperature sensor (Tca) and all the temperature differences obtained by measuring the voltages (ΔVi) between pairs of ovens from the first to the i-th and for outputting corresponding absolute-temperature digital signals (Ti) and
comparator means (CU) for comparing the absolute-temperature signals (Ti) with the predetermined temperature (SETP) and for supplying corresponding signals to switch on or off the heating units (Wi) if this comparison reveals that the temperature is lower or higher than the predetermined temperature respectively.
